# EUROPEAN PATENT SPECIFICATION

(11) **EP 0 429 063 B1**
(45) Date of publication and mention of the grant of the patent: **23.03.1994**
(21) Application number: 90122186.1
(22) Date of filing: 20.11.1990
(51) Int. Cl.: A01K 89/00, F16B 41/00

(54) **Handle fixing structure for spinning reel**
Kurbelbefestigung für eine Angelrolle
Structure de fixation pour manivelle d'un moulinet de pèche

(30) Priority: 20.11.1989 JP 134488/89 U
(43) Date of publication of application: 29.05.1991
(73) Proprietor: SHIMANO INC., Osaka (JP)
(72) Inventor: Oi, Takeshi, Sakai-shi, Osaka (JP)
(74) Representative: Säger, Manfred, Dipl.-Ing.

(56) References cited:
- FR-A- 2 208 692
- US-A- 2 761 484
- US-A- 4 369 930
- US-A- 4 784 396

## Description

### BACKGROUND OF THE INVENTION

### Field of the Invention

The present invention relates to a handle fix structure for a spinning reel.

### Description of the Prior Art

Some of the conventional handle fixing structures can reduce the possibility of slack of a fixing bolt in a fastened condition by fitting a toothed washer and the like on the fixing bolt.

However, such a toothed washer only fitted on the fixing bolt does not function at all for preventing slack of the bolt when the bolt is so loosened that a bolt head is disengaged from the washer. This leads to further slack of the fixing bolt, which requires an improvement of the structure.

In order to prevent slack of the fixing bolt, the structure as disclosed in Japanese Utility Model "Kokai" No. 56-40314 has been proposed, which attempts to reliably prevent slack of the bolt through an extending and contracting effect of a resilient sleeve with fastening of a retaining screw.

However, a problem occurs when a reel structure includes a handle lever foldably pivotably connected to a handle shaft to select a folded position and an operational position by axial sliding movement of the handle shaft, wherein the retaining screw compatibly maintains the handle shaft and the handle lever in the operational position. That is to say, the above noted conventional structure has a jaw for preventing the resilient sleeve from being retracted inwardly, which is required to loosen the retaining screw to be disengaged from the handle shaft when the handle lever is folded by sliding the handle shaft. As a result, the handle lever and the handle shaft are often in danger of accidentally slipping out of a reel body.

### SUMMARY OF THE INVENTION

An object of the present invention is to provide a handle fixing structure of a spinning reel comprising a fixing bolt for compatibly maintaining a handle lever in an operational position and a handle shaft, which facilitates pivotal movement for folding the handle lever and reliably prevents slack of the bolt.

In order to achieve the above object, the present invention is characterized by a handle fixing structure for a spinning reel comprising a reel body, a sleeve shaft rotatably supported inside the reel body, a drive gear integrally formed with an outer periphery of the sleeve shaft, a handle support shaft detachably fitted into and supported by the sleeve shaft for torque transmission, a handle lever foldably and pivotably supported by the handle support shaft, a fixing bolt inserted into the sleeve shaft from an end thereof opposite to the end for attaching the handle support shaft to be fixedly screwed to an inserting end of the support shaft, thereby to maintain the handle lever in a fixed operational position, the fixing bolt being loosened to permit the handle lever to be foldably pivotable, and an anti-slack element made of resin material disposed between the sleeve shaft and the fixing bolt to be unrotatable and axially slidable relative to the sleeve shaft for threadedly receiving the fixing bolt.

With this structure, after the handle support shaft is inserted into the sleeve shaft from one end thereof and the anti-slack element is inserted into the sleeve shaft from the other end thereof, the fixing bolt is screwed to the anti-slack element and to the handle support shaft, thereby to fix the handle lever. Thus, not only a head of the fixing bolt is fixedly fastened to an end face of the sleeve shaft, but also a threaded portion of the fixing bolt is screwed to the anti-slack element without defining a space therebetween, which reliably prevents clattering of a screwed engaging portion to the handle support shaft.

When the sleeve shaft is disengaged from the bolt head by loosening the fixing bolt to pivot the handle lever, the handle support shaft can be exposed outside by an amount corresponding to the loosened amount due to sliding movement of the handle support shaft and the anti-slack element relative to the sleeve shaft.

As a result, the handle lever can be pivoted while maintaining screw engagement between the handle support shaft and the fixing bolt, thereby to be readily folded eliminating the disadvantage of slipping out of the reel body. Furthermore, the handle lever is reliably prevented from clattering and slacking when fixed to the reel body under a friction force of the anti-slack element acting on the fixing bolt.

Other objects, structure and advantages according to the present invention will be apparent from the following description with reference to the accompanying drawings.

### BRIEF DESCRIPTION OF THE DRAWINGS

The drawings show a handle fixing structure for a spinning reel embodying the present invention in which:-
Fig. 1 is a partial sectional view showing a handle fixing condition;
Fig. 2 is a partial sectional view showing a handle folding condition;
Fig. 3 is a partial disassembling Perspective view;
Fig. 4 is a partial section view, and
Fig. 5 is a side view of the spinning reel.

### DESCRIPTION OF THE PREFERRED EMBODIMENTS

The present invention will be described in detail hereinafter referring to the accompanying drawings.

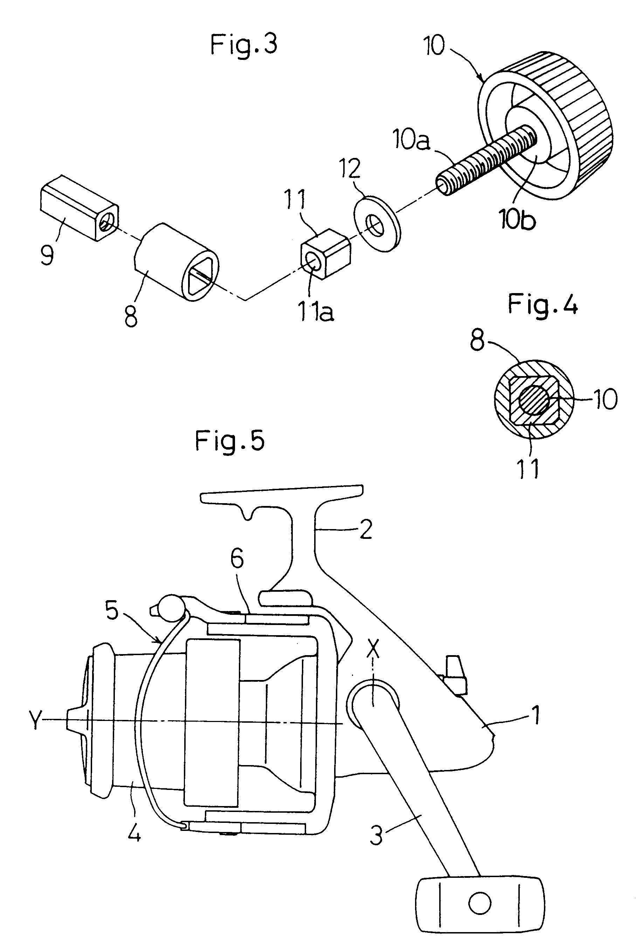

Fig. 5 shows a spinning reel concerning the present invention, which comprises a reel body 1, a pole mount 2 continuing from the reel body 1, a pivotable handle lever 3 extending laterally outwardly from one side of the reel body 1, and a fishing line winding-up spool 4 mounted on a front portion of the reel body 1. The spool 4 carries a rotor 6 in its outer circumference with a bail arm mechanism 5 for guiding a fishing line.

When the handle lever 3 is pivoted about a horizontal axis X, the rotor 6 with the bail arm mechanism is pivotably driven about a longitudinal axis Y through a drive gear 7 mounted inside the reel body 1, and the spool 4 is reciprocated along the longitudinal axis Y in a predetermined stroke.

The handle lever 3 is attachable to either lateral side of the reel body 1 depending on handedness of the fisherman, and is foldably pivotable at a proximal end thereof about an axis Z perpendicular to the axis X and to an arm portion 3a of the handle lever 3.

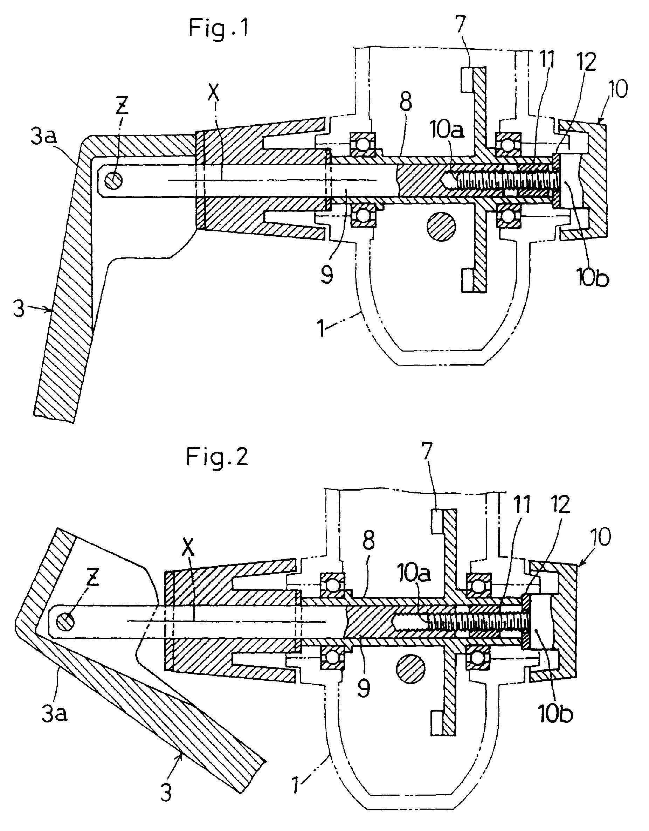

A handle fixing structure of the present invention will be set forth next. As shown in Figs. 1 and 2, inside the reel body 1 is rotatably supported a sleeve shaft 8 integrally forming the drive gear 7 in an outer periphery thereof. A handle support shaft 9 for foldably and pivotably supporting the handle lever 3 is detachably fitted into and supported by the sleeve shaft 8 for torque transmission. A fixing bolt 10 is inserted into the sleeve shaft 8 from an end opposite to the end for attaching the handle support shaft 9 to be fixedly screwed to an inserting end of the handle support shaft 9, thereby to maintain the handle lever 3 in a fixed operational position. The handle lever 3 is foldably pivotable by loosening the fixing bolt 10. More particularly, the sleeve shaft 8 has a rectangular inner periphery and the handle shaft 9 has a rectangular outer periphery to be fitted to the inner periphery of the sleeve shaft 8.

An anti-slack element 11 made of resin material is disposed between the sleeve shaft 8 and the fixing bolt 10 to be unrotatable and axially slidable relative to the sleeve shaft 8, which anti-slack element threadedly receives the fixing bolt 10. More particularly, the anti-slack element 11 is made of synthetic resin, e.g. nylon, and has a rectangular configuration to be fitted into the sleeve shaft 8, and also defines a bore 11a in a core portion thereof having substantially the same diameter as a major diameter of a threaded portion 10a of the fixing bolt 10. The fixing bolt 10 is screwed into the bore 11a thereby to threadedly fit to an inner periphery of the bore 11a. A retaining washer 12 is disposed between a bolt head 10b and an end face of the sleeve shaft 8.

With the above noted structure, the fixing bolt 10 is prevented from slacking by being fastened to be axially fixed through the washer 12 . The threaded portion 10a of the fixing bolt 10 is in contact with the anti-slack element 11 substantially without defining a space therebetween, thereby to prevent clattering to further ensure an anti-slack effect.

When the fixing bolt 10 is loosened, allowances are produced between the bolt head 10b, the washer 12 and the end face of the sleeve shaft 8. In this loosened condition, the handle support shaft 9, the anti-slack element 11 and the fixing bolt 10 are slidable to foldably swing the handle lever 3 with slack of the bolt.

The fitting portion between the sleeve shaft 8 and the anti-slack element 11 is not limited to the rectangular configuration, but may be varied such as a hexagonal splined configuration and the like.

The washer 12 may be toothed to be unrotatable in order to enhance the anti-slack effect.

## Claims

1. A handle fixing structure for a spinning reel comprising;
a reel body (1),
a sleeve shaft (8) rotatably supported inside the reel body (1),
a drive gear (7) integrally formed with an outer periphery of the sleeve shaft (8),
a handle support shaft (9) detachably fitted into and supported by the sleeve shaft (8) for torque transmission,
a handle lever (3) foldably and pivotably supported by the handle support shaft (9),
a fixing bolt (10) inserted into the sleeve shaft (8) from an end thereof opposite to the end for attaching the handle support shaft (9) to be fixedly screwed to an inserting end of the handle support shaft (9), thereby to maintain the handle lever (3) in a fixed operational position, the fixing bolt being loosened to permit the handle lever (3) to be foldably pivotable, and
an anti-slack element (11) made of resin material disposed between the sleeve shaft (8) and the fixing bolt (10) to be unrotatable and axially slidable relative to the sleeve shaft (8) for threadedly receiving the fixing bolt (10).

2. A handle fixing structure for a spinning reel as claimed in Claim 1 wherein the fixing bolt (10) receives a washer (12) in contact with the sleeve shaft (8).

3. A handle fixing structure for a spinning reel as claimed in Claim 1 wherein the sleeve shaft (8) and the anti-slack element (11) are fitted with each other through a surface to surface engagement thereof cut to non-circular cross sections.

4. A handle fixing structure for a spinning reel as claimed in Claim 1 wherein the anti-slack element (11) is made of nylon resin.

## Patentansprüche

1. Kurbelbefestigung für eine Angelrolle, welche folgendes aufweist:
einen Rollenkörper (1),
eine innerhalb des Rollenkörpers (1) drehbar gelagerte Überschiebwelle (8),
ein integral mit einem Außenumfang der Überschiebwelle (8) ausgebildetes Antriebszahnrad (7),
eine lösbar in die Überschiebwelle (8) eingepapte und auf dieser abgestützte Kurbelstützwelle (9),
einen Kurbelhebel (3), der klappbar und verschwenkbar auf der Kurbelstützwelle (9) gelagert ist,
eine in die Überschiebwelle (8) von deren dem Befestigungsende für die Kurbelstützwelle gegenüberliegendem Ende aus eingesetzte Befestigungsschraube (10) zur festen Verschraubung auf einem Einsetzende der Kurbelstützwelle (9), um so den Kurbelhebel (3) in fester Betriebsstellung zu halten, wobei die Befestigungsschraube gelöst wird, damit der Kurbelhebel (3) klappbar verschwenkbar ist, und
ein aus Kunststoff bestehendes Teil (11) zur Verhinderung einer Lösung, das zwischen der Überschiebwelle (8) und der Befestigungsschraube (10) so angeordnet ist, daß es nicht drehbar und gegenüber der Überschiebwelle (8) so axial verschieblich ist, daß es über einen Gewindeeingriff die Befestigungsschraube (10) aufnimmt.

2. Kurbelbefestigung für eine Angelrolle nach Anspruch 1, bei welcher die Befestigungsschraube (10) eine mit der Überschiebwelle (8) in Berührung stehende Unterlegscheibe (12) aufnimmt.

3. Kurbelbefestigung für eine Angelrolle nach Anspruch 1, bei welcher die Überschiebwelle (8) und das Element (11) zur Verhinderung einer Lösung über einen flächigen Eingriff aneinander befestigt sind, der in nichtrunde Querschnitte geschnitten ist.

4. Kurbelbefestigung für eine Angelrolle nach Anspruch 1, bei welcher das Element (11) zur Verhinderung einer Lösung aus Nylonkunststoff besteht.

## Revendications

1. Structure de fixation d'une poignée pour un moulinet à tambour comprenant :
un carter de moulinet (1),
un arbre de forme de manchon (8) supporté en rotation à l'intérieur du carter de moulinet (1),
un pignon d'entraînement (7) faisant partie intégrante de la périphérie extérieure de l'arbre en forme de manchon (8),
un arbre support de poignée (9) installé de manière amovible dans l'arbre en forme de manchon (8) et supporté par ce dernier pour transmettre un couple,
une manivelle de poignée (3) supportée dans un état plié et en pivotement par l'arbre support de poignée (9),
un boulon de fixation (10) introduit dans l'arbre en forme de manchon (8) par une extrémité de cet arbre opposée à l'extrémité de fixation de l'arbre support de poignée (9) pour être rigidement vissé dans une extrémité d'insertion de l'arbre support de poignée (9), de manière à maintenir la manivelle de poignée (3) en position fonctionnelle fixe, le boulon de fixation étant desserré pour permettre de faire pivoter à l'état plié la manivelle de poignée (3), et
un élément non desserrable (11) fabriqué en résine placé entre l'arbre en forme de manchon (8) et le boulon de fixation (10) pour être immobilisé en rotation et coulissant dans la direction axiale par rapport à l'arbre en forme de manchon (8) afin de recevoir le boulon de fixation (10) vissé dans cet élément.

2. Structure de fixation de poignée pour un moulinet à tambour selon la revendication 1, dans laquelle le boulon de fixation (10) reçoit une rondelle (12) en contact avec l'arbre en forme de manchon (8).

3. Structure de fixation de poignée pour un moulinet à tambour selon la revendication 1, dans laquelle l'arbre en forme de manchon (8) et l'élément non desserrable (11) sont assemblés entre eux par une prise de surface à surface de chacun d'eux, lesquels sont usinés avec des sections transversales non circulaires.

4. Structure de fixation de poignée pour un moulinet à tambour selon la revendication 1, dans laquelle l'élément non desserrable (11) est fabriqué en nylon.
